# EUROPÄISCHE PATENTSCHRIFT

(11) **EP 1 283 587 B1**
(45) Veröffentlichungstag und Bekanntmachung des Hinweises auf die Patenterteilung: **28.06.2006**
(21) Anmeldenummer: 02102114.2
(22) Anmeldetag: 08.08.2002
(51) Int. Cl.: H02M 3/335, H02M 3/337

(54) **Netzgerät**
Power supply
Alimentation de puissance

(30) Priorität: 10.08.2001 DE 10139445
(43) Veröffentlichungstag der Anmeldung: 12.02.2003
(73) Patentinhaber: Philips Intellectual Property & Standards GmbH, 20099 Hamburg (DE); Koninklijke Philips Electronics N.V., 5621 BA Eindhoven (NL)
(72) Erfinder: Loef, Christoph, 52088, Aachen (DE); Dürbaum, Thomas, 52088, Aachen (DE); Waffenschmidt, Eberhard, 52088, Aachen (DE); Wendt, Mathias, 52088, Aachen (DE); van der Broeck, Heinz Dr., 52088, Aachen (DE); Albach, Manfred Prof. Dr., 52088, Aachen (DE)
(74) Vertreter: Volmer, Georg

(56) Entgegenhaltungen:
- WO-A-99/16163
- DE-A- 4 443 732
- US-A- 4 679 129
- US-A- 5 619 403
- US-A- 5 659 463
- STEVANOVIC L D ET AL: "Capacitive idling converters with decoupled input voltage and load regulation loops" PROCEEDINGS OF THE ANNUAL POWER ELECTRONICS SPECIALISTS CONFERENCE. (PESC). SEATTLE, JUNE 20 - 25, 1993, NEW YORK, IEEE, US, Bd. CONF. 24, 20. Juni 1993 (1993-06-20), Seiten 681-688, XP010148946 ISBN: 0-7803-1243-0
- PINHEIRO H ET AL: "Performance characterization of two self-oscillating controllers for parallel resonant converters operating with unity input power factor" POWER ELECTRONICS SPECIALISTS CONFERENCE, 1997. PESC '97 RECORD., 28TH ANNUAL IEEE ST. LOUIS, MO, USA 22-27 JUNE 1997, NEW YORK, NY, USA,IEEE, US, 22. Juni 1997 (1997-06-22), Seiten 692-698, XP010241618 ISBN: 0-7803-3840-5

## Beschreibung

Die Erfindung betrifft ein Netzgerät zur Spannungsversorgung eines Plasma-Display-Panels.

An die Stromversorgung von Plasma-Display-Panels, die in zunehmendem Maße auch für Fernsehempfänger eingesetzt werden, werden verschiedene Anforderungen gestellt. Zum einen beträgt die Leistungsaufnahme je nach Größe und der jeweils abgegebenen Helligkeit etwa 100W bis 1000W, zum anderen ist die Belastung der Spannungsquelle pulsierend, wobei die Gleichspannungen konstant sein müssen. Außerdem ist die Höhe der jeweils zu erzeugenden Gleichspannungen von dem individuellen Plasma-Display-Panel abhängig. Schließlich ist außer einer galvanischen Netztrennung eine möglichst sinusförmige Belastung des Netzes erforderlich.

US-A-5 619 403 offenbart ein Gerät zur Stromversorgung mit mehreren Ausgängen. Es besteht aus einer Primärspule und mehreren Ausgängen. Die Primärspule wird in Abhängigkeit von einem der sekundärseitigen Ausgänge geschalten. Der Schaltbetrieb der Schalteinheit die den Ausgang einer anderen Sekundärspule schaltet ist synchron zu dem Schaltbetrieb der Primärspule oder wird von der Eingangsspannung der Primärspule gesteuert.

STEVANOVIC L D ET AL: "Capacitive idling converters with decoupled input voltage and load regulation loops" PROCEEDINGS OF THE ANNUAL POWER ELECTRONICS SPECIALIST CONFERENCE. (PESC). SEATTLE, JUNE 20-25, 1993, NEW YORK, IEEE, US, Bd. CONF. 24, 20. Juni 1993 (1993-06-20), Seiten 681-688, XP010148946 ISBN: 0-7803-1243-0 offenbart eine neue Klasse von isolierten Leerlauf-Kapazitäts Konverter Topologien mit der herausragenden Eigenschaft entkoppelter Feedbackschleifen zwischen Primär- und Sekundärseite. Diese neue Konverterklasse bietet folgende Vorteile während Kosten, Größe und Einfachheit mit herkömmlichen Konvertern mit mehreren Ausgängen vergleichbar ist: Die Rückkoppelung benötigt keine Isolation, alle Ausgänge werden von lastfrei bis voll belastet vollkommen geregelt, eine schnellere Übergangsantwort ist gegeben und jeder Ausgang besitzt einen unabhängigen Kurzschluss Schutz.

US-A-5 659 463 (LEE JAMES) 19.August 1997 (1997-08-19) offenbart einen Spannungskonverter, der ein Gleichstromausgangssignal eines bestimmten Pegels in ein Gleichstromausgangssignal eines gewünschten Pegels wandelt. Der Spannungskonverter enthält einen Schaltumsetzer, der das Eingangssignal empfängt, und einen variablen Differentialausgang, bestehend aus einem ersten und zweiten Ausgang. Der Schaltumsetzer ist in der Lage das Eingangssignal in eine Offset Spannung entsprechend der Differenz der gewünschten Gleichstrom-Ausgangsspannung und der Eingangsspannung zu wandeln. Diese Offset Spannung wird zwischen dem ersten und zweiten Ausgang des variablen Differentialausgang erzeugt. Das Gleichstrom Input Signal steht am zweiten Ausgang des variablen Differentialausgang an um sich mit der Offset Spannung zu addieren und so den gewünschten Ausgangs Level am ersten Ausgang zu erzeugen.

US-A-4 679 129 (SAKAKTBARA KAZUHIKO ET AL) 7. Juli 1987 (1987-07-07) offenbart einen Serien-Resonanz Umsetzer in dem ein Serien-Resonanzkreis gebildet aus einer Resonanz-Kapazität und einer Resonanz-Spule in Serie mit einem Wechselstrom Eingang eines Gleichrichter geschalten ist. Positiver und negativer Strom werden mittels einer Vielzahl von Ein-/Aus-Schater so gesteuert, dass sie abwechselnd durch die Serienschaltung des Serien-Resonanzkreis und Gleichrichter fließen und dabei hinter dem Gleichrichter eine Gleichspannung erzeugen. In Serie zu dem Serien-Schwingkreis ist ein Parallel-Resonanzschwingkreis geschalten. Die Resonanzfrequenz des Parallel-Resonanzschwingkreis ist niedriger als die des Serien-Resonanzschwingkreis, liegt aber über dem hörbaren Frequenzbereich DE4443732 (ERNST ALMEDER, JOSEF FELKEL) 22. Juni 1995 (1995-06-22) offenbart eine Wandlerschaltung zur Umwandlung einer stark schwankenden Eingangsgleichspannung in zumindest zwei voneinander unabhängiger Boardspannungen für Nahverkehrszüge. An den beiden Ausgängen werden eine 3-Phasen Ausgangs-Wechselspannung sowie Ausgangs-Gleichspannung bereitgestellt.

WO9916163 offenbart einen Serien/Parallel Resonanz Umsetzer mit mehreren Ausgängen, für Normalbetried und Stand-By Betrieb geeignet.

Aufgabe der vorliegenden Erfindung ist es, ein die oben genannten Anforderungen erfüllendes Netzgerät zur Spannungsversorgung eines Plasma-Display-Panels vorzuschlagen, für das mehrere Versorgungsspannungen benötigt werden, die in verschiedener Weise vom Bildinhalt und von Einstellungen der Helligkeit und des Kontrastes abhängig sind.

Es wird ein Netzgerät angegeben, in dem ein aktives Netzfilter ohne galvanische Trennung zur Erzeugung einer im wesentlichen konstanten Gleichspannung aus einer Netzwechselspannung vorgesehen ist, wobei an den Ausgang des aktiven Netzfilters ein Gleichspannungsumsetzer mit mindestens einem ersten und einem zweiten Ausgang und einer galvanischen Trennung zwischen der konstanten Gleichspannung und den Ausgängen angeschlossen ist, wobei dem Gleichspannungsumsetzer ein Regler zugeordnet ist, der die Spannung an dem ersten Ausgang regelt, und wobei mindestens dem zweiten Ausgang ein Spannungssteller nachgeschaltet ist.

Vorzugsweise ist bei der Erfindung vorgesehen, dass der Regler die Spannung an dem einen Ausgang auf eine zugeführte erste Referenzspannung regelt. Diese Referenzspannung kann in einer mit dem Plasma-Display-Panel verbundenen Schaltung erzeugt werden, so dass bei einer Montage des erfindungsgemäßen Netzgerätes dieses automatisch an den individuellen Spannungsbedarf des Plasma-Display-Panels angepasst wird.

Außer der Lösung der erfindungsgemäßen Aufgabe hat das Netzgerät noch den Vorteil eines hohen Wirkungsgrades, was einerseits unmittelbar der Energieersparnis zugutekommt und andererseits durch die geringere Verlustleistung konstruktive Vorteile nach sich zieht, die sich auf die Kosten und die Lebensdauer positiv auswirken.

Für die Netztrennung ist bei dem erfindungsgemäßen Netzgerät vorzugsweise vorgesehen, dass der Gleichspannungsunsetzer mit mindestens einem Transformator versehen ist. Er kann nicht resonant oder resonant arbeiten.

Das erfindungsgemäße Netzgerät ermöglicht eine einfache Spannungsversorgung einer Stand-by-Spannung dadurch, dass der Transformator über eine zusätzliche Wicklung verfügt, die zusammen mit einem Resonanz-Kondensator einen Resonanzkreis bildet, dessen Resonanzfrequenz oberhalb der Betriebsfrequenz des Gleichspannungsumsetzers liegt, dass die Spannung am Resonanz-Kondensator über einen Gleichrichter zur Versorgung eines Stand-by-Betriebs entnehmbar ist und dass eine Einrichtung zur Erhöhung der Betriebsfrequenz auf die Resonanzfrequenz des Resonanzkreises, wenn der Stand-by-Betrieb erfolgen soll, vorgesehen ist.

Gemäß einer Weiterbildung ist vorgesehen, dass mindestens dem anderen Ausgang ein Spannungssteller nachgeschaltet ist, wobei vorzugsweise der Spannungssteller einen weiteren Regler enthält, dem eine weitere Referenzspannung zuführbar ist. Dadurch wird eine weitgehende Entkopplung der Ausgänge des Netzgerätes erzielt, so dass sich Lastschwankungen an dem einen Ausgang nicht als Spannungsschwankungen an dem anderen Ausgang bemerkbar machen. Ferner ist auch hier eine Voreinstellung dieser Spannung in einer dem Plasma-Display-Panel zugeordneten Schaltung möglich.

Die obengenannte Weiterbildung kann derart ausgestaltet sein, dass der Spannungssteller die gesamte diesem Ausgang entnommene Leistung stellt. Damit kann die Gleichspannung an dem anderen Ausgang herauf- oder herabgesetzt werden, wie es jeweils erforderlich ist.

Eine bezüglich des Wirkungsgrades günstigere Lösung besteht jedoch in einer Ausgestaltung derart, dass der Spannungssteller eine Leistung stellt, die zur Anpassung der Spannung am weiteren Ausgang an die Ausgangsspannung des nachgeschalteten Stellgliedes erforderlich ist. Bei dieser Ausgestaltung ist die Verlustleistung lediglich durch den Strom und die Differenzspannung bedingt, also bei gleicher Effizienz nur bezogen auf die Differenzleistung.

Ausführungsbeispiele der Erfindung sind in der Zeichnung anhand mehrerer Figuren als Blockschaltbilder dargestellt und in der nachfolgenden Beschreibung näher erläutert. Es zeigt:
- Fig. 1: ein erstes Ausführungsbeispiel,
- Fig. 2: ein zweites Ausführungsbeispiel,
- Fig. 3: ein Ausführungsbeispiel eines in dem erfindungsgemäßen Netzgerät verwendbaren Spannungsstellers,
- Fig. 4: eine Schaltungsanordnung eines weiteren Spannungsstellers und
- Fig. 5: ein Ausführungsbeispiel eines Gleichspannungsumsetzers mit einer Schaltung zur Erzeugung einer Stand-by-Betriebsspannung.

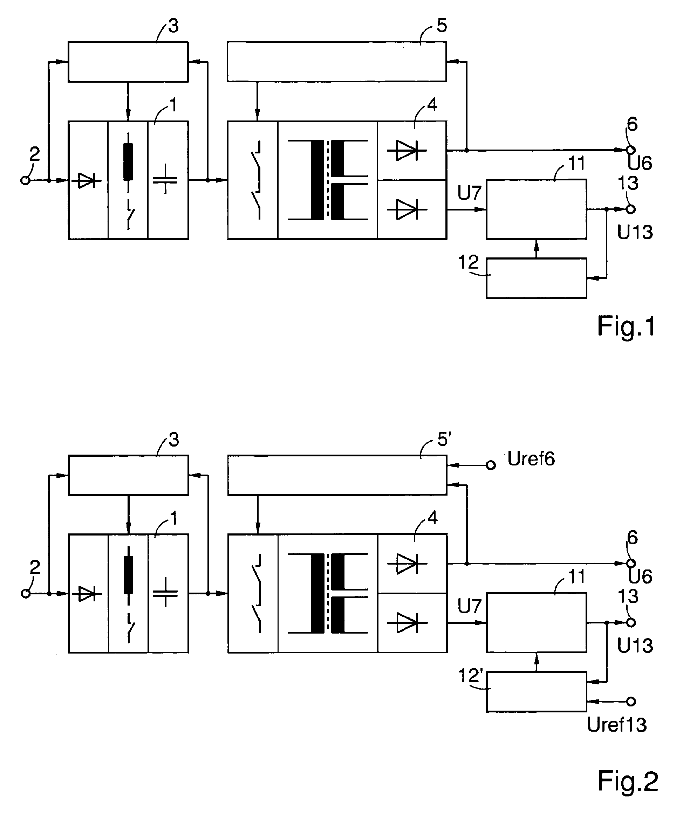

Das in Fig. 1 dargestellte Ausführungsbeispiel weist ein aktives Netzfilter 1 auf, dessen Eingang 2 mit dem Stromnetz verbindbar ist und an dessen Ausgang eine geregelte Gleichspannung Udc entnehmbar ist. Derartige aktive Netzfilter sind an sich bekannt und in der Literatur ausreichend beschrieben, beispielsweise in Hirschmann W.: "Schaltnetzteile: Konzepte, Bauelemente, Anwendungen", München 1990, ISBN 3-8009-1550-2, Seiten 437 bis 445. Deshalb ist das aktive Netzfilter 1 lediglich angedeutet, wobei die Netzspannung und die Gleichspannung Udc einem Regler zugeführt werden, der das aktive Netzfilter im Sinne einer konstanten Gleichspannung Udc steuert.

An das aktive Netzfilter schließt sich ein Gleichspannungsumsetzer 4 an, der einen Transformator enthält, der für eine galvanische Netztrennung sorgt und sekundärseitig mit einer Anzahl von Wicklungen ausgestattet ist. Dabei können die Sekundärwicklungen völlig voneinander getrennt jeweils zur Erzeugung einer Ausgangsspannung dienen oder auch als sogenannte Sparwicklung ausgebildet sein. Über je einen Gleichrichter sind an die Sekundärwicklungen Ausgänge 6, 7 und erforderlichenfalls weitere nicht dargestellte Ausgänge angeschlossen. Ein Regler 5 regelt die Spannung am Ausgang 6 auf einen konstanten Wert.

Dem Ausgang 7 ist ein Spannungssteller 11 mit einem Regler 12 nachgeschaltet. Am Ausgang 13 steht somit eine geregelte Gleichspannung U13 zur Verfügung Für die Versorgung von Plasma-Display-Panels genügt es häufig nicht, konstante für alle Exemplare voreingestellte Spannungen zur Verfügung zu stellen. Die Versorgungsspannungen können viel mehr von Exemplar zu Exemplar streuen. Dazu ist bei dem Ausführungabdapiel nach Fig. 2 vorgesehen, dass den Reglern 5' und 12' jeweils eine externe Referenzspannung Uref6 und Uref13 zuführbar ist. Diese können dem Plasma-Display-Panel entnommen werden.

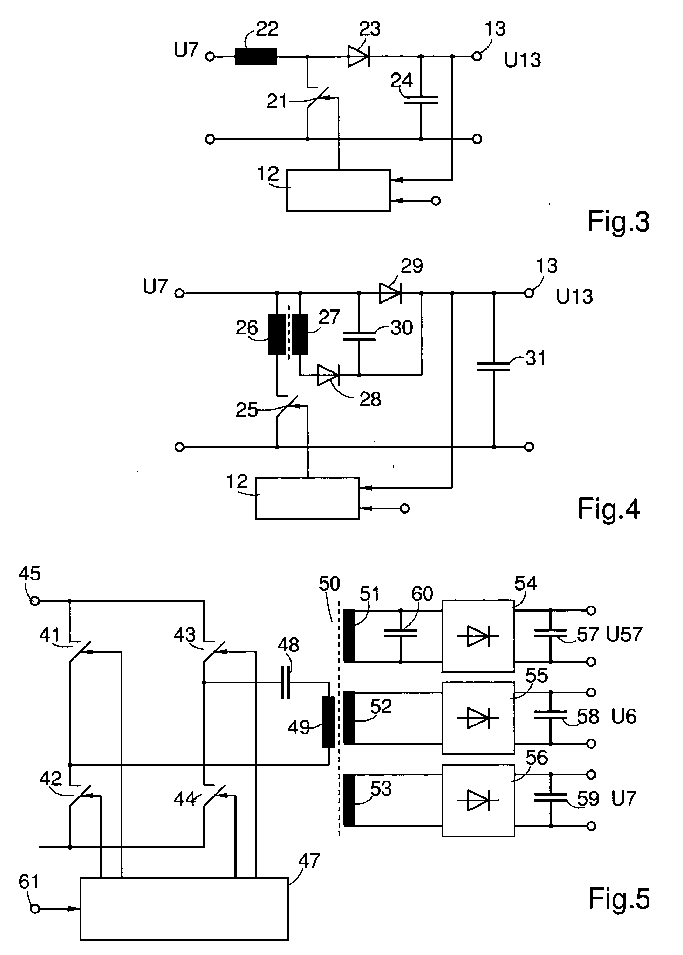

Als Spannungssteller für die Spannung U7 und gegebenenfalls weiterer geregelter Ausgangaspannungen eignen sich die beiden im folgenden anhand der Figuren 3 und 4 beschriebenen Ausführungsbeispiele. Die ungeregelte Eingangsspannung U7, die niedriger als die Spannung U13 ist, wird bei dem Ausführungsbeispiel nach Fig. 3 über einen sogenannten Boost-Converter auf den erforderlichen Ausgangsspannungspegel U13 umgesetzt. Durch die Variation des Tastgrades eines Schalters 21 wird das Umsetzungsverhältnis eingestellt. Dazu vergleicht der Regler 12 die Spannung U13 mit der Referenzspannung Uref13. Aus der Differenz wird der erforderliche Tastgrad bestimmt, mit dem der Schalter 21 angesteuert wird. Im übrigen besteht der Converter aus einer Spule 22, einer Diode 23 und einem Kondensator 24. Dieser Converter muss auf die maximal erforderliche Ausgangsleistung dimensioniert werden

Weitere als Spannungssteller geeignete Schaltungen, die ebenfalls auf die gesamte Leistung zu dimensionieren sind, sind Vollbrückenumrichter, Halbbrückenumrichter (hartschaltend oder weichschaltend), Tiefsetzsteller (Buck-Converter), Hoch-Tiefsetzsteller (Buck-Boost-Converter) sowie ein Durchflusswandler (Forward-Converter), oder eine Anordnung mit einem gesteuerten Gleichrichter. Zur Anpassung an die jeweiligen Spannungs-Übersetzungsverhältnisse der Spannungssteller können die Windungszahlen des Transformators entsprechend gewählt werden.

Bei dem in Fig 4 dargestellten Ausführungsbeispiel eines Spannungsstellers wird zu der Eingangsspannung U7 eine veränderliche Spannung hinzuaddiert. Die Eingangsspannung des Spannungsstellers ist deshalb so gewählt, dass diese stets kleiner als die erforderliche Ausgangsspannung U13 ist. Die veränderliche Spannung wird durch einen sogenannten Sperrwandler erzeugt. Die dabei im Sperrwandler umgesetzte Leistung ergibt sich aus dem Produkt der Differenzspannung, aus Ausgangsspannung und Eingangsspannung und dem erforderlichen Laststrom. Somit ist im Vergleich zu der vorherigen Ausrührungsform eine geringere Leistung zu stellen. Daher können auch die erforderlichen Komponenten kleiner ausgelegt werden. Ein Schalter 25 wird mit der Ausgangsspannung des Reglers 12 geschaltet und liegt in Reihe mit einer Primärwicklung 26 eines Transformators. Die Spannung an dessen Sekundärwicklung 27 wird mit Hilfe von Dioden 28, 29 gleichgerichtet und mit dem Kondensator 30 geglättet. An einem weiteren Kondensator 31 und damit am Ausgang 13 steht dann die geregelte Spannung U13 zur Verfügung.

Der in Fig. 5 dargestellte Gleichspannungsumsetzer umfasst eine Brückenschaltung aus vier Halbleiterschaltern 41 bis 44, die von einer Steuerschaltung 47 im Gegentakt angesteuert werden. Die von dem aktiven Netzfilter 1 (Figuren 1 und 2) erzeugte Gleichspannung wird den Anschlüssen 45 und 46 zugeführt. An den Ausgmg der Brückenschaltung ist eine Reihenschaltung aus einem Kondensator 48 und der Primärwicklung 49 des Transformators 50 angeschlossen. Der Transformator 50 weist drei Sekundärwicklungen 51, 52, 53 auf, an die jeweils ein Gleichrichter 54, 55, 56 und ein Glattungskondensator 57, 58, 59 angeschlossen sind Die Wicklungen 52, 53 dienen zur Erzeugung der bereits beschriebenen Betriebsspannungen U6 und U7, während die Wicklung 51 zur Erzeugung einer Spannung U57 für einen Stand-by-Betrieb vorgesehen ist. Der Wicklung 51 ist ein Kondensator 60 parallelgeschaltet. Die sich dabei ergebene Resonanzfrequenz liegt oberhalb der Resonanzfrequenz der Reihenschaltung des Kondensators 58 und der Streuinduktivität der Primär wicklung 49.

Im normalen Betrieb des angeschlossenen Plasma-DispLay-Panels werden sämtliche Spannungen U6, U7 und U57 erzeugt. Soll das Plasma-Display-Panel abgeschaltet und in einem Stand-by-Betrieb gehalten werden, wird einem Eingang 61 eine geeignete Schaltspannung zugeführt, welche eine Heraufsetzung der Schaltfrequenz der Halbleiterschalter 41 bis 44 zur Folge hat. Bei dieser höheren Frequenz wird über die Sekundärwicklungen 52 und 53 keine Leistung mehr übertragen, während durch die Resonanz des Kondensators 60 mit der Streuinduktivität der Sekundärwicklung 51 die Spannung U57 aufrecht erhalten bleibt und beispielsweise einen Fernbedienungsempfänger speist.

Ein praktisch ausgeführtes Netzgerät ist für eine automatische Anpassung an Netzspannungen zwischen 110V und 230V ausgelegt, wobei die vom aktiven Netzfilter erzeugte Gleichspannung bei etwa 400V liegt. U6 beträgt dann 175V, während U7 bei 65V liegt.

## Patentansprüche

1. Netzgerät zur Spannungsversorgung eines Plasma-Display-Panels,
wobei ein aktives Netzfilter (1) ohne galvanische Trennung zur Erzeugung einer im wesentlichen konstanten Gleichspannung aus einer Netzwechselspannung vorgesehen ist,
wobei an dem Ausgang des aktiven Netzfilters (1) ein Gleichspannungsumsetzer (4) mit mindestens einem ersten und einem zweiten Ausgang (6,7) und einer galvanischen Trennung zwischen der konstanten - Gleichspannung und den Ausgängen angeschlossen ist,
wobei dem Gleichspannungsumsetzer (4) ein Regler (5, 5') zugeordnet ist, der die Spannung an dem ersten Ausgang (6) regelt,
wobei mindestens dem zweiten Ausgang (7) ein Spannungssteller (11) nachgeschaltet ist,
wobei der Gleichspannungsumsetzer (4) einen Transformator (50) aufweist, **dadurch gekennzeichnet, dass** der Transformator (50) über eine zusätzliche Wicklung (51) verfügt, die zusammen mit einem Resonanz-Kondensator (60) einen Resonanzkreis bildet, dessen Resonanzfrequenz oberhalb der Betriebsfrequenz des Gleichspannungsumsetzers liegt,
wobei eine Einrichtung (47, 61) zur Erhöhung der Betriebsfrequenz auf die Resonanzfrequenz des Resonanzkreises (51, 60), wenn der Stand-by-Betrieb erfolgen soll, vorgesehen ist, so dass die Spannung am Rezonanz-Kondensator (60) über einen Gleichrichter (54) zur Versorgung eines Stand-by-Betriebs erhalten bleibt.

2. Netzgerät nach Anspruch 1,
**dadurch gekennzeichnet,**
**dass** der Regler (5') die Spannung an dem ersten Ausgang (6) auf eine azgeführte erste Referenzspannung regelt.

3. Netzgerät nach einem der Ansprüche 1 oder 2,
**dadurch gekennzeichnet**,
das der Spannungssteller (11) einen weiteren Regler (12) enthält, dem eine weitere Referenzspannung zuführbar ist.

4. Netzgerät nach einem der vorhergehenden Ansprüche,
**dadurch gekennzeichnet,**
**dass** der Spannungssteller (11) die gesamte diesem Ausgang entnommene Leistung stellt.

5. Netzgerät nach einem der Ansprüche 1 bis 3,
**dadurch gekennzeichnet,**
**dass** der Spannungssteller (11) eine Leistung stellt, die zure Anpassung der Spannung am zweiten Ausgang an die Ausgangsspannung des Spannungsstellers erforderlich ist.

## Claims

1. A power supply for supplying power to a plasma display panel,
wherein an active network filter (1) without electrical isolation is provided for the generation of an essentially constant DC voltage from an AC supply voltage,
a DC-DC voltage converter (4) being connected to the output of the active network filter (1) with at least one first and one second output (6, 7) and with electrical isolation between the constant DC voltage and the outputs,
a regulator (5, 5') being assigned to the DC-DC voltage converter (4) to regulate the voltage at the first output (6),
and a voltage actuator (11) being connected in series at least to the second output (7),
the DC-DC voltage converter (4) comprising a transformer (50),
**characterized in that** the transformer (50) has an additional winding (51) which together with a resonant capacitor (60) forms a resonant circuit whose resonant frequency is above the operating frequency of the DC voltage converter, an arrangement (47, 61) being provided for increasing the operating frequency to the resonant frequency of the resonant circuit (51, 60) when the stand-by operation is to follow, so that the voltage on the resonant capacitor (60) is maintained via a rectifier (54) for providing for stand-by operation.

2. A power supply as claimed in claim 1, **characterized in that** the regulator (5') regulates the voltage at the first output (6) to an applied first reference voltage.

3. A power supply as claimed in one of claims 1 or 2, **characterized in that** the voltage actuator (11) comprises a further regulator (12) to which a further reference voltage can be fed.

4. A power supply as claimed in one of the above claims, **characterized in that** the voltage actuator (11) sets the entire power drawn from this output.

5. A power supply as claimed in any one of claims 1 to 3, **characterized in that** the voltage actuator (11) sets a power that is required for matching the voltage at the second output to the output voltage of the voltage actuator.

## Revendications

1. Alimentation de puissance pour l'alimentation en tension d'un panneau d'affichage au plasma
dans laquelle un filtre de réseau actif (1) sans séparation galvanique est prévu pour la production d'une tension continue essentiellement constante à partir d'une tension alternative de réseau,
dans laquelle un convertisseur de tension continue (4) avec au moins des première et deuxième sorties (6,7) et une séparation galvanique entre la tension continue constante et les sorties est raccordé à la sortie du filtre de réseau actif (1),
dans laquelle un régulateur (5, 5') qui règle la tension à la première sortie (6) est affecté au convertisseur de tension continue (4) et
dans laquelle un contrôleur de tension (11) est au moins monté en aval de la deuxième sortie (7),
dans laquelle le convertisseur de tension continue (4) présente un transformateur (50),
**caractérisée en ce**
**que** le transformateur (50) dispose d'un enroulement supplémentaire (51) qui forme avec un condensateur de résonance (60) un circuit de résonance dont la fréquence de résonance est supérieure à la fréquence de fonctionnement du convertisseur de tension continue,
un dispositif (47,61) étant prévu pour l'élévation de la fréquence de fonctionnement à la fréquence de résonance du circuit de résonance (51,60) lorsque le mode stand-by doit être activé de telle sorte que la tension sur le condensateur de résonance (60) reste maintenue par l'intermédiaire d'un redresseur (54) pour l'alimentation d'un mode en stand-by.

2. Alimentation de puissance selon la revendication 1,
**caractérisée en ce**
**que** le régulateur (5') règle la tension à la première sortie (6) à une première tension de référence amenée.

3. Alimentation de puissance selon l'une des revendications 1 ou 2,
**caractérisée en ce**
**que** le contrôleur de tension (11) contient un régulateur supplémentaire (12) auquel peut être amenée une tension de référence supplémentaire.

4. Alimentation de puissance selon l'une des revendications précédentes,
**caractérisée en ce**
**que** le contrôleur de tension (11) contrôle toute la puissance prélevée à cette sortie.

5. Alimentation de puissance selon l'une de revendications 1 à 3,
**caractérisée en ce**
**que** le contrôleur de tension (11) contrôle une puissance qui est nécessaire à l'adaptation de la tension à la deuxième sortie à la tension de sortie du contrôleur de tension.
